# EUROPEAN PATENT SPECIFICATION

(11) **EP 1 376 553 B1**
(45) Date of publication and mention of the grant of the patent: **03.12.2008**
(21) Application number: 03253619.5
(22) Date of filing: 09.06.2003
(51) Int. Cl.: G11B 7/006, G11B 7/135

(54) **Recording apparatus and method for improving overwrite characteristics**
Aufzeichnungsgerät und Verfahren zur Verbesserung von Überschreibeigenschaften
Appareil d'enregistrement et procédé d'amélioration de caractéristiques de superposition d'écriture

(30) Priority: 10.06.2002 KR 2002032336
(43) Date of publication of application: 02.01.2004
(73) Proprietor: SAMSUNG ELECTRONICS CO., LTD., Suwon-City, Kyungki-do (KR)
(72) Inventor: Kim, Seong-sue, 203-404 Kumho Samsung Raemian Apt., Seongdong-gu, Seoul (KR)
(74) Representative: Robinson, Ian Michael

(56) References cited:
- JP-A- 5 334 674
- JP-A- 6 295 438
- JP-A- 2001 307 365
- US-A- 5 541 900
- US-A- 5 644 420

## Description

The present invention relates to a recording apparatus and method, and more particularly, to a recording apparatus and method for improving overwrite characteristics when a mark is recorded on a rewritable medium.

Rewritable recording media include only once writable media, such as CD-Rs, DVD-Rs, and rewritable recording media, such as CD-RWs, DVD-RWs, DVD+RWs, and DVD-RAMs.

Rewriting is performed on rewritable recording media, i.e., phase-change recording media, according to a method of overwriting a new phase-change mark in an area in which a phase-change mark is already written.

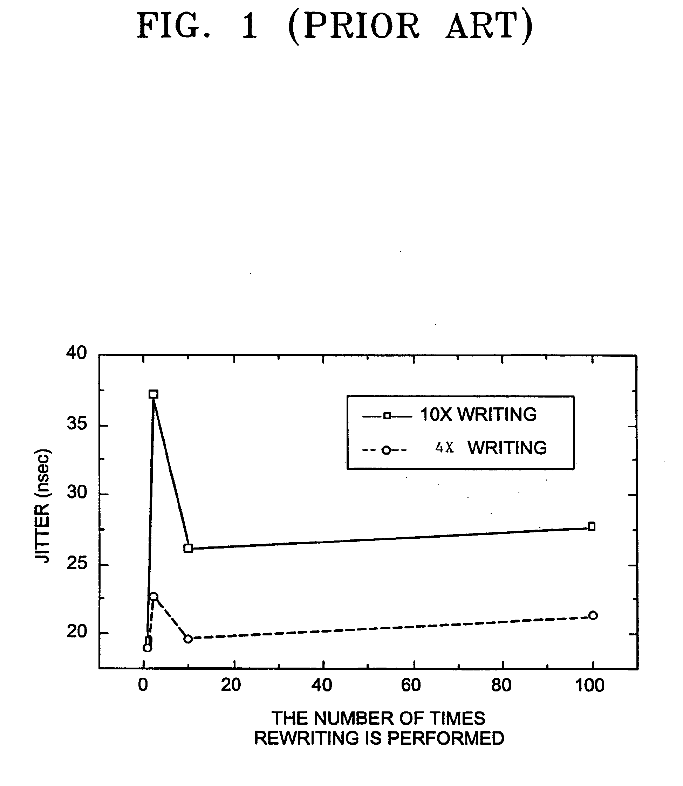

Figure 1 illustrates a jitter characteristic measured based on the number of times overwriting is performed on a CD-RW optical disc for a speed factor of 10 (10X) at speed factors of 4 and 10 (4X and 10X). In Figure 1, the horizontal axis denotes the number of times overwriting is performed and the vertical axis denotes the jitter characteristic with respect to overwriting.

Figure 1 shows the result of the measurement of jitter of the phase-change mark is according to the number of times overwriting in the speed of a speed factor 1, when a pulse width of 1T is 220nsec at a speed factor of 1. Jitter refers to a deviation in a pulse width corresponding to the length of a recording mark with respect to a standard pulse width. Thus, as shown in Figure 1, jitter can be expressed with nsec.

As seen in Figure 1, when overwriting is performed on a CD-RW optical disc for a speed factor of 10 in the speed factor of 10, jitter occurring when two times writing is performed increases by 19nsec compared with jitter occurring when once writing is performed. The increase in jitter occurs because an already recorded phase-change mark is not completely removed. The increase in jitter is a factor due to which data cannot be reproduced.

US 5 644 420 discloses a light beam condensing apparatus and method. In embodiment 17A modulator is provided which can be switched according to an operational mode so as to provide a desired condensing spot shape. During seeking and regenerating the shape of the spot is adjusted to optimise the tracking servo signal and the regenerative signal. During recording and erasure the spot diameter is not restricted. The accuracy of the reading signal for optical discs having different densities and track pitches is improved. Highly reliable recording with no crosstalk due to erroneously unerased data is realised. The pre-characterising portions of the appended claims are based on this document.

According to the present invention there is provided an apparatus and method as set forth in the appended claims. Preferred features of the invention will be apparent from the dependent claims, and the description which follows.

The present invention provides a recording apparatus and method for improving overwrite characteristics by increasing an erasing rate of a already written phase-change mark when a mark is recorded on a rewritable recording media.

According to an aspect of the present invention, there is provided a recording apparatus for recording a mark on a recordable recording medium by using an optical pickup having a light source and an objective lens for focusing light emitted from the light source as a light spot on a recording surface of a recording medium. When recording on a rewritable recording medium, the size of the light spot formed on the recording surface of a recording medium is increased more than when recording on an only once writable recording medium.

The optical pickup may include a light spot size adjuster and a controller. The light spot size adjuster may change the size of the light spot formed on the recording surface of a recording medium. The controller controls the light spot size controller, so that when recording on the rewritable recording medium, the size of the light spot formed on the recording surface of a recording medium is increased more than when recording on the only once writable recording medium.

The light spot size adjuster may be combined with the objective lens to form a single body.

The light spot size adjuster may adjust the size of the light spot formed on the recording surface of a recording medium by adjusting the transmittance of the liquid crystal to change the effective numerical aperture of the objective lens.

In detail, the light spot size adjuster may have a structure in which the liquid crystal is applied only at a position corresponding to the periphery of the objective lens and electrodes are connected to the position so as to change the effective numerical aperture of the objective lens.

The objective lens may be formed to change the size of the light spot formed on the recording surface of a recording medium, and a controller, which controls the objective lens so that when recording on the rewritable recording medium, the size of the light spot formed on the recording surface of a recording medium is increased more than when recording on the only once writable recording medium and reproducing from a predetermined recording medium, may be further included.

When recording on the rewritable recording medium, the objective lens may be defocused to increase the size of the light spot formed on the recording surface of a recording medium.

The rewritable recording medium is a phase-change recording medium. In detail, the rewritable recording medium may be a CD-RW, a DVD-RW, a DVD+RW, a DVD-RAM, or a once or more recordable next generation DVD having higher density than a DVD and be applied to record on and/or reproduce from at least one of a CD-family optical disc, a DVD-family optical disc, and a next generation DVD-family optical disc.

According to another aspect of the present invention, there is also provided a method of recording on a rewritable recording medium by using an optical pickup having a light source and an objective lens for focusing light emitted from the light source as a light spot on a recording surface of a recording medium. The size of the light spot formed on the recording surface of the rewritable recording medium is increased more than when recording on an only once writable recording medium.

The rewritable recording medium is a phase-change recording medium. In more detail, the rewritable recording medium may be a CD-RW, a DVD-RW, a DVD+RW, a DVD-RAM, or a one or more rewritable next generation DVD having higher density than a DVD.

US 5 541 900 discloses an optical information recording and reproducing apparatus and method for different type media. A circuit for recognising the suitable spot size and means for defocusing or off-tracking based on the recognised spot size are provided.

JP 2001/307365 discloses an optical head device and optical disc device in which the spot diameter for reproduction is smaller than the spot size for recording.

For a better understanding of the invention, and to show how embodiments of the same may be carried into effect, reference will now be made, by way of example, to the accompanying diagrammatic drawings in which:
Figure 1 is a graph illustrating jitter measured based on the number of times overwriting is performed on a CD-RW optical disc for a speed factor of 10 (10X) at speed factors of 4 and 10 (4X and 10X);
Figure 2 is a schematic view of a recording apparatus using an optical pickup according to an embodiment of the present invention;
Figure 3 is a schematic plan view of an embodiment of a light spot size adjuster of Figure 2;
Figure 4 is a view illustrating the status of the operation of a light spot size controller, which forms a small light spot by focusing, and the width of light proceeding during reproducing of a recording medium and recording on once writable recording medium;
Figure 5 is a view illustrating the status of the operation of a light spot size controller, which forms a large light spot by focusing, and the variation of the width of light proceeding when a mark is recorded on a rewritable recording media;
Figure 6 is a schematic view of a recording apparatus using an optical pickup according to another embodiment of the present invention;
Figure 7 is a schematic view of a recording apparatus using an optical pickup according to still another embodiment of the present invention;
Figure 8 is a view illustrating a phase-change mark corresponding to a 3T mark recorded on a 10X CD-RW optical disc;
Figures 9 through 14 are views illustrating the result of erasing of the mark of Figure 8 by using light spots formed to sizes of 262nm, 267nm, 279nm, 300nm, 350nm, and 450nm in full width half maximum (FWHM); and
Figure 15 is a view illustrating the result obtained by dividing the size of the remaining portion of the mark after erasing it, shown in Figures 9 through 14, by the size of the mark shown in Figure 8 together with the amount of defocused light necessary for obtaining the light spots of sizes of 262nm, 267nm, 279nm, 300nm, 350nm, and 450nm in FWHM.

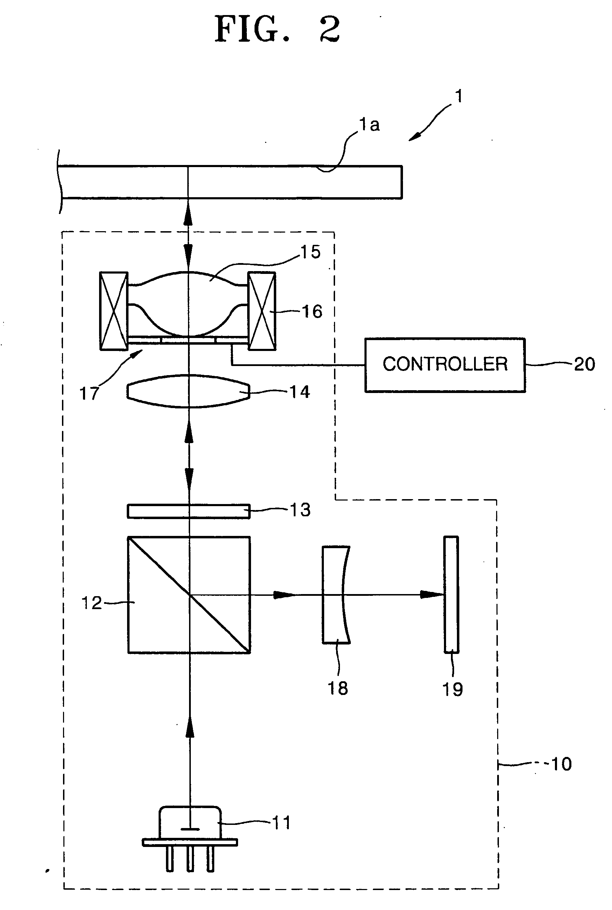

Figure 2 is a schematic view of a recording apparatus using an optical pickup 10 according to an embodiment of the present invention. Referring to Figure 2, the recording apparatus includes an optical pickup 10 having a light source 11, an objective lens 15, and a light spot size adjuster 17, and a controller 20. The objective lens 15 focuses light emitted from the light source 11 as a light spot on a recording surface 1a of a recording medium 1. The light spot size adjuster 17 can change the size of the light spot focused on the recording surface 1a of the recording medium 1. The controller 20 controls the light spot size adjuster 17 to adjust the size of the light spot.

It is preferable that the light spot size adjuster 17 is mounted together with the objective lens 15 in an actuator 16, which controls the objective lens 15 in focusing direction, tracking direction, or the like. This is because it is preferable that the center of the light spot size adjuster 17 coincides with the central axis of the objective lens 15.

In Figure 2, the light spot size adjuster 17 is installed apart from the objective lens 15. However, the light spot size adjuster 17 may be installed on one lens surface of the objective lens 15, preferably, a lens surface facing the light source 11 so as to form a single body.

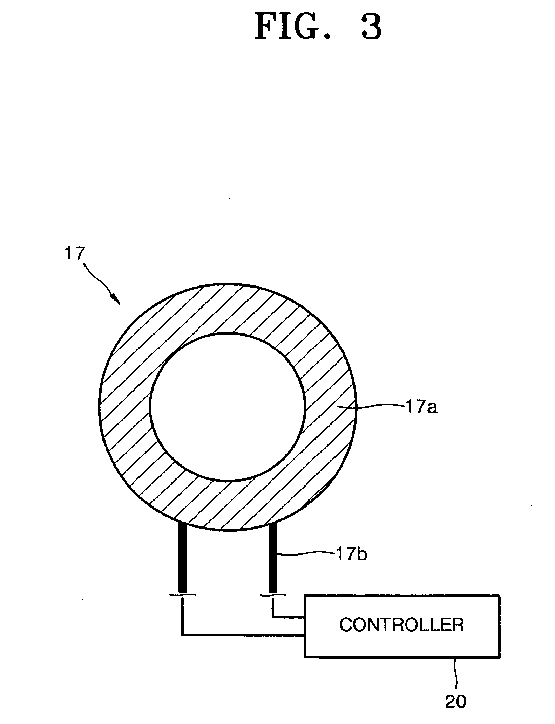

The light spot size adjuster 17 may change an effective numerical aperture (NA) of the objective lens 15 by controlling the transmittance of a liquid crystal so as to adjust the size of the light spot focused on the recording surface 1a of the recording medium 1. In more detail, as shown in Figure 3, the light spot size adjuster 17 may have a liquid crystal area 17a to which electrodes 17b are connected in a position corresponding to the peripheral area of the objective lens 15 to change the effective NA of the objective lens 15.

The controller 20 controls the light spot size adjuster 17 so that during recording on a rewritable recording medium, i.e., a phase-change recording medium, the size of the light spot focused on the recording surface 1a of the recording media 1 is increased more than during recording on an only once writable medium and reproducing from a recording medium.

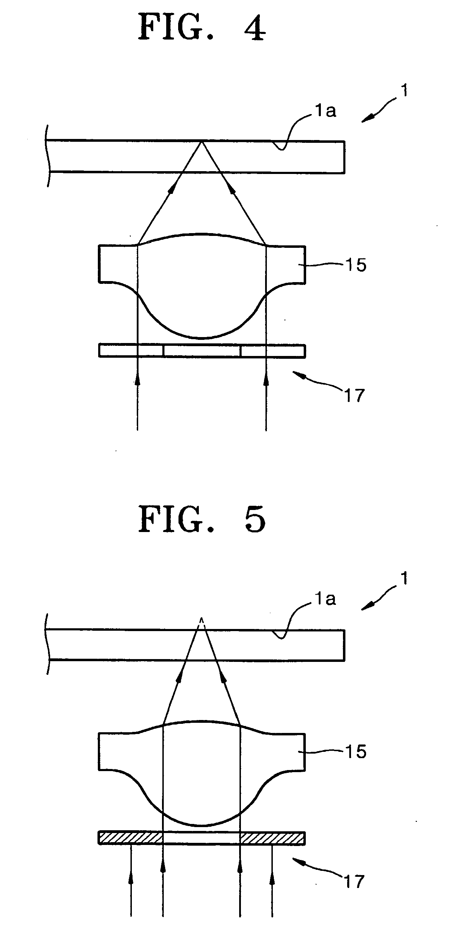

In a case where that the light spot size adjuster 17 is formed to apply a voltage to the liquid crystal area 17a to control the transmittance thereof, as shown in Figure 4, the controller 20 applies a voltage to the liquid crystal area 17a so that the transmittance of the liquid crystal is maximum to have a high effective NA during reproducing from the recording medium 1 and recording on the only once writable recording medium. Also, as shown in Figure 5, during recording on the rewritable recording medium, the controller 20 applies a voltage to the liquid crystal area 17a so that the transmittance of the liquid crystal is minimum to have a low effective NA.

As described above, in a case where a voltage is applied to the light spot size adjuster 17, which is of a liquid crystal type, to adjust an effective NA, the optical pickup 10 forms a light spot having a minimum size on the recording surface 1a of the recording medium 1 during reproducing from a recording medium and recording on an once time writable recording medium. Also, when recording on a rewritable recording medium, the size of the light spot formed on the recording surface 1a of the recording medium 1 may be increased more than when reproducing from a recording medium and recording on the only once writable recording medium.

In a case where the size of a light spot is increased when recording on a rewritable recording medium, overwriting characteristics are improved due to the follow reasons.

If overwriting is carried out on a phase-change recording medium, an existing mark is erased therefrom and a new mark is written thereon. The erasing rate of the existing mark increases as the temperature at which erasing occurred is maintained for a long period of time.

Let us assume that the power of light per unit area radiated onto the recording surface 1a of the recording medium 1 when a recording method of the present invention is applied equal to the power of light radiated when an existing recording method is applied or corresponds to the temperature at which erasing may occur. In this case, the area of light radiated when the recording method of the present invention is applied is wider than the area of light radiated when the existing recording method is applied. Thus, the temperature at which erasing is performed is maintained for a longer period of time than when the existing method is used.

Accordingly, as the present invention, when recorded on a rewritable recording medium by increasing the size of a light spot, the erasing rate of a mark increases more than the erasing rate of a mark written by applying an existing recording method. Thus, overwirting characteristics of a phase-change recording medium are improved.

Here, the existing recording method refers to a recording method by which the size of a light spot formed to record on a rewritable recording medium is equal to the size of a light spot formed to reproduce from a recording medium to record on an once writable recording medium.

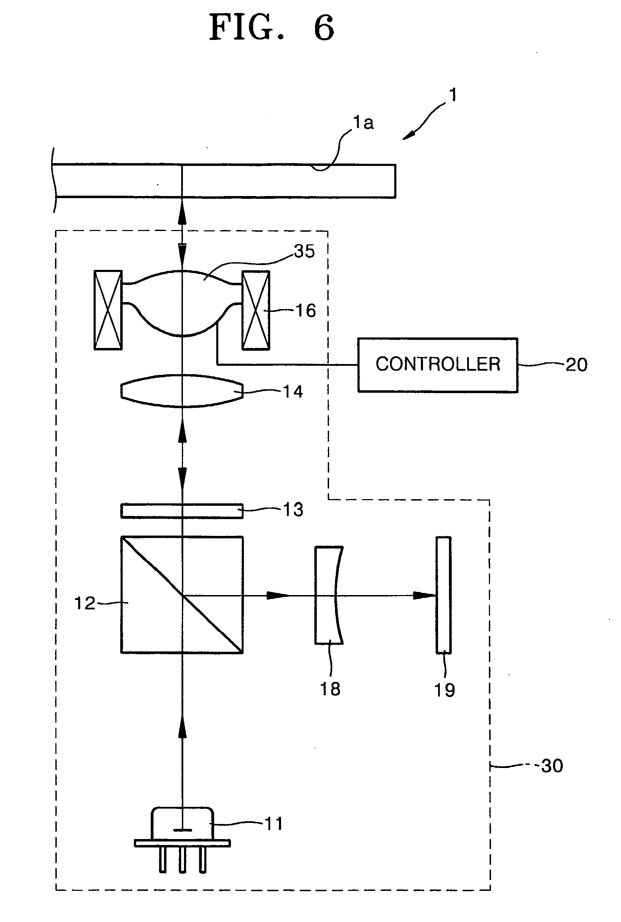

Referring to Figure 6, in an optical pickup 30 used in the recording apparatus according to the present invention, while the light spot size adjuster 17 shown in Figure 2 is not included, it is possible that an objective lens 35 is formed to adjust the size of a light spot formed on the recording surface 1a of the recording medium 1. For example, when a liquid crystal, which can adjust the size of the effective NA by applying a voltage, is used as the objective lens 35 and an effective NA is changed by adjusting the size of the NA of the objective lens 35, i.e., the liquid crystal lens, according to controlling of a controller 20, the size of a light spot can vary.

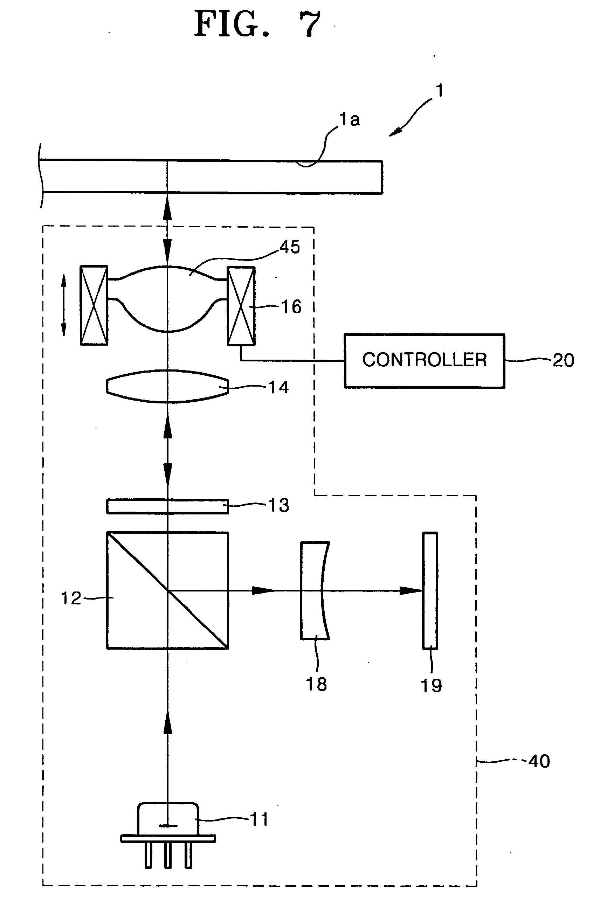

Referring to Figure 7, an optical pickup 40 used in the recording apparatus according to the present invention has a general structure in which an additional light spot size adjuster (17 of Figure 2) is not installed. Instead, when recording is performed on a rewritable recording media, an objective lens 45 may be defocused by controlling of a controller 20, so that the size of a light spot formed on the recording surface 1a of the recording medium 1 is enlarged.

As shown in Figures 2, 6, and 7, each of the optical pickups 10, 30, and 40 used in the recording apparatus according to the present invention includes an optical path changing unit, a collimating lens 14, and a photodetector 19. The optical path changing unit changes an optical path of light emitted from the light source 11. The collimating lens 14 changes divergent light emitted from the light source 11 to parallel light. The photodetector 19 receives light that is reflected on the recording surface 1a of the recording medium 1and is incident via the objective lens 35 and the optical path changing unit to detect an information signal and/or an error signal.

The light source 11 may be a semiconductor laser, which emits light having a predetermined wavelength. When the recording apparatus according to the present invention is suitable for a CD-family optical disc, the light source 11 emits light having a wavelength of 780nm. When the recording apparatus is suitable for a DVD-family optical disc, the light source 11 emits light having a red wavelength, e.g., light having a wavelength of 650nm. When the recording apparatus is suitable for a next generation DVD-family optical disc, the light source 11 emits light having a blue wavelength, e.g., light having a wavelength of 405nm.

The optical path changing unit may include a polarizing light beam splitter 12, which transmits or reflects incident light according to the sate of polarization, and wave plate 13, which changes the polarization of incident light, preferably, a quarter wave plate for the wavelength of light emitted from the light source 11. Alternatively, the optical path changing unit may include a beam splitter, which transmits and reflects incident light at a predetermined ratio.

In Figures 2, 6, and 7, reference numeral 18 denotes a sensing lens. The sensing lens 18 increases the size of a beam, which is reflected on the recording surface 1a of the recording medium 1 and goes toward the photodetector 19, so that the photodetector 19 receives the beam. In a case where the optical pickups 10, 30, and 40 detect a focusing error signal according to an astigmatic method, the sensing lens 18 may include an astigmatic lens or may further include an additional astigmatic lens.

Here, the optical configurations of the optical pickups 10, 30, and 40 are not limited to the configurations shown in Figure 2, 6, and 7, and may be variously modified.

The recording apparatus according to the present invention records a mark on a recordable medium or reproduces a mark or a pit written on a predetermined recording medium. When recording on a rewritable medium, the recording apparatus makes the size of a light spot formed on a recording surface of a recording medium larger when recording on only once writable medium.

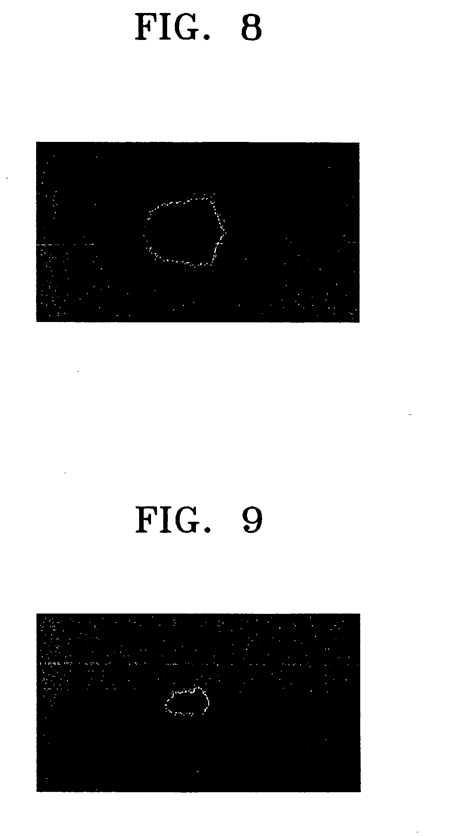

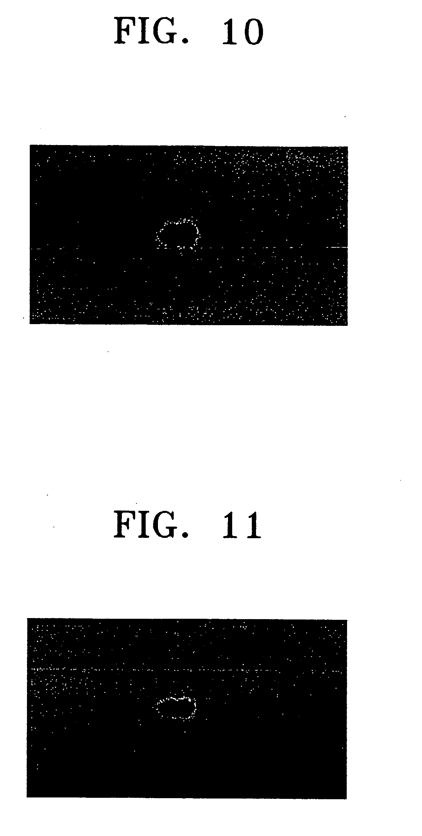

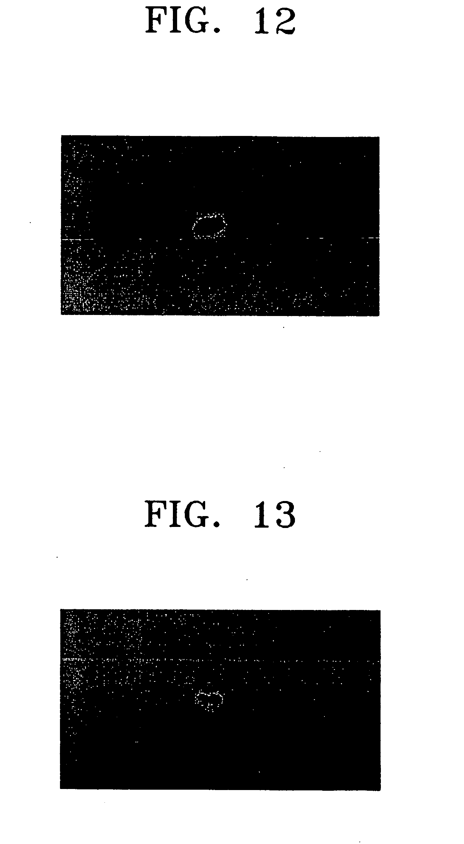

Hereinafter, the capability of improving the overwriting characteristics of a rewritable phase-change recording medium by using a recording method according to the present invention to increase the erasing rate of a mark will be described with reference to Figures 8 through 15.

Figure 8 shows a phase-change mark corresponding to a 3T recorded on a 10X CD-RW optical disc, and Figures 9 through 14 show the result of erasing the mark of Figure 8 by forming light spots each having sizes of 262nm, 267nm, 279nm, 300nm, 350nm, and 450nm in FWHM.

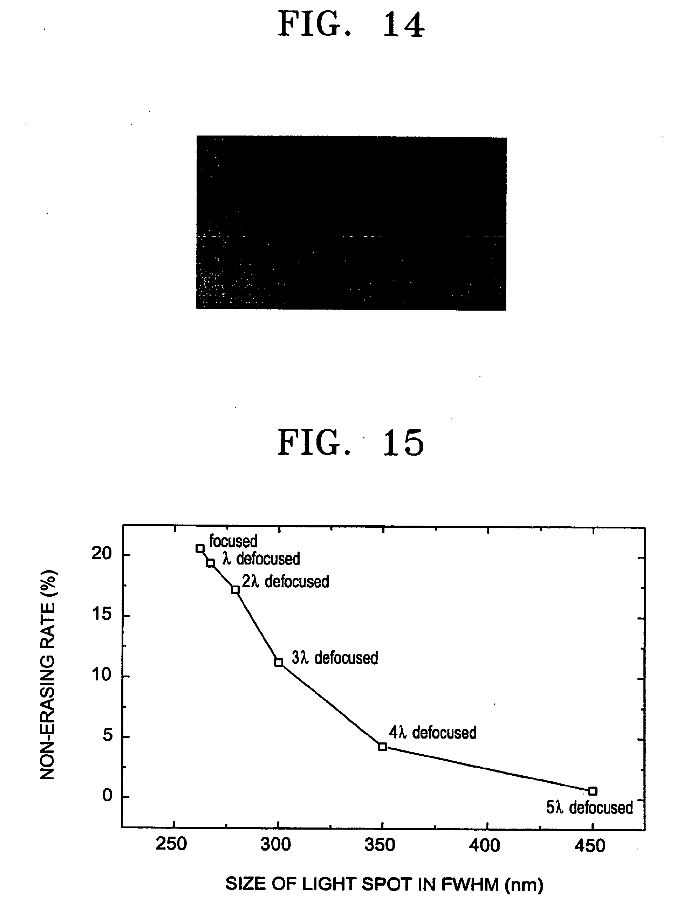

Figure 15 shows the result obtained by dividing the size of the remaining mark shown in Figures 9 through 14 after erasing the size of the mark shown in Figure 8 using the light spots each having sizes 262nm, 267nm, 279nm, 300nm, 350nm, and 450nm in FWHM by the size of the mark shown in Figure 8 before erasing. Also, Figure 15 illustrates the amount of defocused light necessary for obtaining light spots each having sizes of 262nm, 267nm, 279nm, 300nm, 350nm, and 450nm in FWHM.

A change in the size of a light spot can be obtained by changing an effective NA of the objective lens or defocusing the objective lens 35. As the effective NA is reduced, the distance of a focal point of light focused by the objective lens 35 gets longer. Thus, the change in the effective NA and the defocusing of the objective lens 35 may be expressed by the amount of defocused light.

As seen in Figure 15, the size 262nm of the light spot is obtained when the amount of defocused light spot is zero, i.e., the light spot is focused, since the effective NA is equal to the case of an only once writable recording medium or the objective lens 35 is not defocused. Also, the sizes 267nm, 279nm, 300nm, 350nm, and 450nm are obtained when the light spot is defocused by λ, 2λ, 3λ, 4λ, and 5λ, respectively.

As seen in Figures 8 through 14, as the size of the light spot increases, the size of the remaining portion of the mark after being erased is reduced. This can be confirmed from the graph shown in Figure 15.

The above-described experiment illustrates that the overwriting characteristics may be improved by increasing the erasing rate of a mark when the recording method according to the present invention is applied to a 10X CD-RW optical disc. The recording method according to the present invention can be applied to optical discs having whatever formats when the optical disc is a phase-change recording medium as a CD-RW.

In other words, the recording method according to the present invention can be applied to record a phase-change mark on various types of rewritable recording media including CD-RWs, DVD-RWs, DVD+RWs, DVD-RAMs, once or more rewritable next generation DVDs having higher density than DVDs. Here, the next generation DVDs refer to high capacity recording media having 20GB or more storage capacity to store information on high definition moving pictures and is being currently standardized.

As described above, a recording apparatus according to the present invention can record on an only once writable recording medium as well as on a rewritable medium. Also, the recording apparatus can reproduce from a predetermined recording medium, i.e., an only once writable recording medium, a rewritable medium, and a reproduction only recording medium. The only once writable recording medium may be a CD-R, a DVD-R, or an only once writable next generation DVD. The reproduction only recording medium may be a CD-ROM, a DVD-ROM, or a reproduction only next generation DVD.

The above-described recording apparatus according to the present invention can be applied to record a mark on and/or reproduce recorded information from at least one of a CD-family optical disc, a DVD-family optical disc, or a next generation DVD-family optical disc.

As described above, according to the present invention, when recording on a rewritable recording medium, the size of a light spot is enlarged more than when recording on an only once writable recoding medium. Thus, when a mark is recorded on the rewritable recording medium, the erasing rate of an existing recorded phase-change mark is increased to improve the overwriting characteristics.

Although a few preferred embodiments have been shown and described, it will be appreciated by those skilled in the art that various changes and modifications might be made without departing from the scope of the invention, as defined in the appended claims.

## Claims

1. A recording apparatus for recording a mark on a recordable recording medium by using an optical pickup having a light source (11) and an objective lens (15) for focusing light emitted from the light source (11) as a light spot on a recording surface of a recording medium, **characterised in that** when recording on a rewritable recording medium, the size of the light spot formed on the recording surface of a recording medium is increased more than when recording on an only once writable recording medium.

2. The recording apparatus of claim 1, wherein the optical pickup comprises:
a light spot size adjuster (17) that may change the size of the light spot formed on the recording surface of a recording medium; and
a controller (20) that controls the light spot size adjuster (17), so that when recording on the rewritable recording medium, the size of the light spot formed on the recording surface of a recording medium is increased more than when recording on the only once writable recording medium and reproducing from a recording medium.

3. The recording apparatus of claim 2, wherein the light spot size adjuster (17) is combined with the objective lens (15) to form a single body.

4. The recording apparatus of claim 2 or 3, wherein the light spot size adjuster (17) adjusts the size of the light spot formed on the recording surface of a recording medium by adjusting the transmittance of liquid crystal (17a) to change the effective numerical aperture of the objective lens (15).

5. The recording apparatus of claim 4, wherein the light spot size adjuster (17) has a structure in which the liquid crystal (71a) is applied only at a position corresponding to the periphery of the objective lens (15) and electrodes (17b) are connected to the liquid crystal (17a) so as to change the effective numerical aperture of the objective lens (15).

6. The recording apparatus of any preceding claim, wherein:
the objective lens (15) is formed to change the size of the light spot formed on the recording surface of a recording medium; and
the apparatus further includes a controller (20) that controls the objective lens (15), so that when recording on the rewritable recording medium, the size of the light spot formed on the recording surface of a recording medium is increased more than when recording on the only once writable recording medium and reproducing from a predetermined recording medium.

7. The recording apparatus of any preceding claim, wherein when recording on the rewritable recording medium, the objective lens (15) is defocused to increase the size of the light spot formed on the recording surface of a recording medium.

8. The recording apparatus of any preceding claim, wherein the rewritable recording medium is a phase-change recording medium.

9. The recording apparatus of claim 8, wherein the rewritable recording medium is one of a CD-RW, a DVD-RW, a DVD+RW, a DVD-RAM, a once or more recordable next generation DVD having higher density than a DVD and wherein being applied to record on and/or reproduce from at least one of a CD-family optical disc, a DVD-family optical disc, and a next generation DVD-family optical disc.

10. A method of recording on a rewritable recording medium by using an optical pickup having a light source (11) and an objective lens (15) for focusing light emitted from the light source (11) as a light spot on a recording surface of a recording medium, **characterised in that** the size of the light spot formed on the recording surface of the rewritable recording medium is increased more than when recording on an only once writable recording medium.

11. The method of claim 10, wherein the optical pickup comprises a light spot size adjuster (17) that changes the size of the light spot formed on the recording surface of a recording medium; and
wherein by controlling the light spot size adjuster (17), when recording on the rewritable recording medium, the size of the light spot formed on the recording surface of a recording medium is increased more than when recording on the only once writable recording medium and reproducing from a predetermined recording medium.

12. The method of claim 10, wherein:
the objective lens (15) is formed to change the size of the light spot formed on the recording surface of a recording medium; and
wherein by controlling the objective lens (15), when recording on the rewritable recording medium, the size of the light spot formed on the recording surface of a recording medium is increased more than when recording on the only once writable recording medium and reproducing from a predetermined recording medium.

13. The method of any of claims 10 to 12, wherein when recording on the rewritable recording medium, the objective lens (15) is defocused to increase the size of the light spot formed on the recording surface of a recording medium.

14. The method of any of claims 10 to 13, wherein the rewritable recording medium is a phase-change recording medium.

15. The method of claim 14, wherein the rewritable recording medium is one of a CD-RW, a DVD-RW, a DVD+RW, a DVD-RAM, and a one or more rewritable next generation DVD having higher density than a DVD.

## Patentansprüche

1. Aufzeichnungsgerät zum Aufzeichnen einer Markierung auf einem aufzeichenbaren Aufzeichnungsmedium durch Verwendung eines optischen Abtastgeräts mit einer Lichtquelle (11) und einer Objektivlinse (15) zum Fokussieren von von der Lichtquelle (11) abgegebenem Licht als Lichtfleck auf einer Aufzeichnungsfläche eines Aufzeichnungsmediums, **dadurch gekennzeichnet, dass** sich der auf der Aufzeichnungsfläche eines Aufzeichnungsmediums ausgebildete Lichtfleck mehr vergrößert, wenn auf einem überschreibbaren Aufzeichnungsmedium aufgezeichnet wird, als wenn man auf einem nur einmal beschreibbaren Aufzeichnungsmedium aufzeichnet.

2. Aufzeichnungsgerät nach Anspruch 1, wobei das optische Abtastgerät Folgendes umfasst:
einen Lichtfleckgrößenregler (17), der die Größe des auf der Aufzeichnungsfläche eines Aufzeichnungsmediums ausgebildeten Lichtflecks ändern kann; und
eine Steuerung (20), die den Lichtfleckgrößenregler (17) derart steuert, dass sich der auf der Aufzeichnungsfläche eines Aufzeichnungsmediums ausgebildete Lichtfleck mehr vergrößert, wenn auf einem überschreibbaren Aufzeichnungsmedium aufgezeichnet wird, als wenn man auf einem nur einmal beschreibbaren Aufzeichnungsmedium aufzeichnet und von einem Aufzeichnungsmedium wiedergibt.

3. Aufzeichnungsgerät nach Anspruch 2, wobei der Lichtfleckgrößenregler (17) mit der Objektivlinse (15) zu einem einzigen Körper vereint wird.

4. Aufzeichnungsgerät nach Anspruch 2 oder 3, wobei der Lichtfleckgrößenregler (17) die Größe des auf der Aufzeichnungsfläche eines Aufzeichnungsmediums ausgebildeten Lichtflecks durch Regeln der Transmission von Flüssigkristall (17a) regelt, um die effektive numerische Apertur der Objektivlinse (15) zu ändern.

5. Aufzeichnungsgerät nach Anspruch 4, wobei der Lichtfleckgrößenregler (17) eine Struktur aufweist, in der das Flüssigkristall (17a) nur an einer Position zur Anwendung gebracht wird, die dem Umfang der Objektivlinse (15) entspricht, und Elektroden (17b) mit dem Flüssigkristall (17a) verbunden sind, um so die effektive numerische Apertur der Objektivlinse (15) zu ändern.

6. Aufzeichnungsgerät nach einem der vorhergehenden Ansprüche, wobei:
die Objektivlinse (15) zum Ändern der Größe des auf der Aufzeichnungsfläche eines Aufzeichnungsmediums ausgebildeten Lichtflecks ausgebildet ist; und
das Gerät ferner eine Steuerung (20) enthält, die die Objektivlinse (15) derart steuert, dass sich der auf der Aufzeichnungsfläche eines Aufzeichnungsmediums ausgebildete Lichtfleck mehr vergrößert, wenn auf einem überschreibbaren Aufzeichnungsmedium aufgezeichnet wird, als wenn man auf einem nur einmal beschreibbaren Aufzeichnungsmedium aufzeichnet und von einem vorbestimmten Aufzeichnungsmedium wiedergibt.

7. Aufzeichnungsgerät nach einem der vorhergehenden Ansprüche, wobei, wenn auf einem überschreibbaren Aufzeichnungsmedium aufgezeichnet wird, die Objektivlinse (15) defokussiert wird, um den auf der Aufzeichnungsfläche eines Aufzeichnungsmediums ausgebildeten Lichtfleck zu vergrößern.

8. Aufzeichnungsgerät nach einem der vorhergehenden Ansprüche, wobei das überschreibbare Aufzeichnungsmedium ein Phasenänderungsaufzeichnungsmedium ist.

9. Aufzeichnungsgerät nach Anspruch 8, wobei das überschreibbare Aufzeichnungsmedium eine CD-RW, eine DVD-RW, eine DVD+RW, eine DVD-RAM oder eine DVD nächster Generation, die einmal oder mehrmals aufzeichenbar ist und höherer Dichte ist als eine DVD, ist, und wobei es verwendet wird, um auf einem optischen Datenträger der CD-Familie, einem optischen Datenträger der DVD-Familie und/oder einem optischen Datenträger der DVD-Familie der nächsten Generation aufzuzeichnen oder davon wiederzugeben.

10. Verfahren des Aufzeichnens auf einem überschreibbaren Aufzeichnungsmedium durch Verwendung eines optischen Abtastgeräts mit einer Lichtquelle (11) und einer Objektivlinse (15) zum Fokussieren von von der Lichtquelle (11) abgegebenem Licht als Lichtfleck auf einer Aufzeichnungsfläche eines Aufzeichnungsmediums, **dadurch gekennzeichnet, dass** sich der auf der Aufzeichnungsfläche des überschreibbaren Aufzeichnungsmediums ausgebildete Lichtfleck mehr vergrößert, als wenn man auf einem nur einmal beschreibbaren Aufzeichnungsmedium aufzeichnet.

11. Verfahren nach Anspruch 10, wobei das optische Abtastgerät einen Lichtfleckgrößenregler (17) umfasst, der die Größe des auf der Aufzeichnungsfläche eines Aufzeichnungsmediums ausgebildeten Lichtflecks ändert; und
und wobei sich durch Steuern des Lichtfleckgrößenreglers (17) der auf der Aufzeichnungsfläche eines Aufzeichnungsmediums ausgebildete Lichtfleck mehr vergrößert, wenn auf dem überschreibbaren Aufzeichnungsmedium aufgezeichnet wird, als wenn man auf einem nur einmal beschreibbaren Aufzeichnungsmedium aufzeichnet und von einem vorbestimmten Aufzeichnungsmedium wiedergibt.

12. Verfahren nach Anspruch 10, wobei:
die Objektivlinse (15) zum Ändern der Größe des auf der Aufzeichnungsfläche eines Aufzeichnungsmediums ausgebildeten Lichtflecks ausgebildet ist; und
wobei sich durch Steuern der Objektivlinse (15) der auf der Aufzeichnungsfläche eines Aufzeichnungsmediums ausgebildete Lichtfleck mehr vergrößert, wenn auf dem überschreibbaren Aufzeichnungsmedium aufgezeichnet wird, als wenn man auf einem nur einmal beschreibbaren Aufzeichnungsmedium aufzeichnet und von einem vorbestimmten Aufzeichnungsmedium wiedergibt.

13. Verfahren nach einem der Ansprüche 10 bis 12, wobei, wenn auf dem überschreibbaren Aufzeichnungsmedium aufgezeichnet wird, die Objektivlinse (15) defokussiert wird, um den auf der Aufzeichnungsfläche des Aufzeichnungsmediums ausgebildeten Lichtfleck zu vergrößern.

14. Verfahren nach einem der Ansprüche 10 bis 13, wobei das überschreibbare Aufzeichnungsmedium ein Phasenänderungsaufzeichnungsmedium ist.

15. Verfahren nach Anspruch 14, wobei das überschreibbare Aufzeichnungsmedium eine CD-RW, eine DVD-RW, eine DVD+RW, eine DVD-RAM oder eine DVD nächster Generation, die einmal oder mehrmals überschreibbar ist und höherer Dichte ist als eine DVD, ist.

## Revendications

1. Appareil d'enregistrement pour enregistrer une marque sur un support d'enregistrement enregistrable en utilisant un dispositif optique de lecture ayant une source de lumière (11) et une lentille d'objectif (15) pour focaliser la lumière émise depuis la source de lumière (11) en un point lumineux sur une surface d'enregistrement d'un support d'enregistrement, **caractérisé en ce que** lors de l'enregistrement sur un support d'enregistrement réinscriptible, la taille du point lumineux formé sur la surface d'enregistrement d'un support d'enregistrement est augmentée davantage que lors de l'enregistrement sur un support d'enregistrement inscriptible une seule fois.

2. Appareil d'enregistrement selon la revendication 1, dans lequel le dispositif optique de lecture comprend :
un dispositif de réglage de taille de point lumineux (17) qui peut changer la taille du point lumineux formé sur la surface d'enregistrement d'un support d'enregistrement ; et
une unité de commande (20) qui commande le dispositif de réglage de taille de point lumineux (17), de telle sorte que lors de l'enregistrement sur le support d'enregistrement réinscriptible, la taille du point lumineux formé sur la surface d'enregistrement d'un support d'enregistrement soit augmentée davantage que lors de l'enregistrement sur le support d'enregistrement inscriptible une seule fois et de la reproduction depuis un support d'enregistrement.

3. Appareil d'enregistrement selon la revendication 2, dans lequel le dispositif de réglage de taille de point lumineux (17) est combiné à la lentille d'objectif (15) afin de former un corps unique.

4. Appareil d'enregistrement selon la revendication 2 ou 3, dans lequel le dispositif de réglage de taille de point lumineux (17) règle la taille du point lumineux formé sur la surface d'enregistrement d'un support d'enregistrement en réglant la transmittance du cristal liquide (17a) afin de changer l'ouverture numérique efficace de la lentille d'objectif (15).

5. Appareil d'enregistrement selon la revendication 4, dans lequel le dispositif de réglage de taille de point lumineux (17) a une structure dans laquelle le cristal liquide (71a) est appliqué uniquement à une position qui correspond à la périphérie de la lentille d'objectif (15) et des électrodes (17b) sont connectées au cristal liquide (17a) de façon à changer l'ouverture numérique efficace de la lentille d'objectif (15).

6. Appareil d'enregistrement selon l'une quelconque des revendications précédentes, dans lequel :
la lentille d'objectif (15) est formée pour changer la taille du point lumineux formé sur la surface d'enregistrement d'un support d'enregistrement et ;
l'appareil comporte en outre une unité de commande (20) qui commande la lentille d'objectif (15), de telle sorte que lors de l'enregistrement sur le support d'enregistrement réinscriptible, la taille du point lumineux formé sur la surface d'enregistrement d'un support d'enregistrement soit augmentée davantage que lors de l'enregistrement sur le support d'enregistrement inscriptible une seule fois et de la reproduction depuis un support d'enregistrement prédéterminé.

7. Appareil d'enregistrement selon l'une quelconque des revendications précédentes, dans lequel lors de l'enregistrement sur le support d'enregistrement réinscriptible, la lentille d'objectif (15) est défocalisée afin d'augmenter la taille du point lumineux formé sur la surface d'enregistrement d'un support d'enregistrement.

8. Appareil d'enregistrement selon l'une quelconque des revendications précédentes, dans lequel le support d'enregistrement réinscriptible est un support d'enregistrement à changement de phase.

9. Appareil d'enregistrement selon la revendication 8, dans lequel le support d'enregistrement réinscriptible est l'un d'un CD-RW, d'un DVD-RW, d'un DVD+RW, d'un DVD-RAM, d'un DVD de la prochaine génération enregistrable une ou plusieurs fois ayant une densité supérieure à celle d'un DVD et étant appliqué pour enregistrer sur et/ou un reproduire depuis au moins l'un d'un disque optique de la famille CD, d'un disque optique de la famille DVD, et d'un disque optique de la gamme DVD de la prochaine génération.

10. Procédé d'enregistrement sur un support d'enregistrement réinscriptible en utilisant un dispositif optique de lecture ayant une source de lumière (11) et une lentille d'objectif (15) pour focaliser la lumière émise depuis la source de lumière (11) en un point lumineux sur une surface d'enregistrement d'un support d'enregistrement, **caractérisé en ce que** la taille du point lumineux formé sur la surface d'enregistrement du support d'enregistrement réinscriptible est augmentée davantage que lors de l'enregistrement sur un support d'enregistrement inscriptible une seule fois.

11. Procédé selon la revendication 10, dans lequel le dispositif optique de lecture comprend un dispositif de réglage de taille de point lumineux (17) qui change la taille du point lumineux formé sur la surface d'enregistrement d'un support d'enregistrement ; et
dans lequel en commandant le dispositif de réglage de taille de point lumineux (17), lors de l'enregistrement sur le support d'enregistrement réinscriptible, la taille du point lumineux formé sur la surface d'enregistrement d'un support d'enregistrement est augmentée davantage que lors de l'enregistrement sur le support d'enregistrement inscriptible une seule fois et de la reproduction depuis un support d'enregistrement prédéterminé.

12. Procédé selon la revendication 10, dans lequel :
la lentille d'objectif (15) est formée pour changer la taille du point lumineux formé sur la surface d'enregistrement d'un support d'enregistrement et ;
dans lequel en commandant la lentille d'objectif (15), lors de l'enregistrement sur le support d'enregistrement réinscriptible, la taille du point lumineux formé sur la surface d'enregistrement d'un support d'enregistrement est augmentée davantage que lors de l'enregistrement sur le support d'enregistrement inscriptible une seule fois et de la reproduction depuis un support d'enregistrement prédéterminé.

13. Procédé selon l'une quelconque des revendications 10 à 12, dans lequel lors de l'enregistrement sur le support d'enregistrement réinscriptible, la lentille d'objectif (15) est défocalisée afin d'augmenter la taille du point lumineux formé sur la surface d'enregistrement d'un support d'enregistrement.

14. Procédé selon l'une quelconque des revendications 10 à 13, dans lequel le support d'enregistrement réinscriptible est un support d'enregistrement à changement de phase.

15. Procédé selon la revendication 14, dans lequel le support d'enregistrement réinscriptible est l'un d'un CD-RW, d'un DVD-RW, d'un DVD+RW, d'un DVD-RAM, d'un DVD de la prochaine génération réinscriptible une ou plusieurs fois ayant une densité supérieure à celle d'un DVD.
